# EUROPEAN PATENT SPECIFICATION

(11) **EP 2 724 835 B1**
(45) Date of publication and mention of the grant of the patent: **13.07.2016**
(21) Application number: 13190611.7
(22) Date of filing: 29.10.2013
(51) Int. Cl.: B29C 45/26, E03F 5/06

(54) **PROCESS FOR INJECTION MOLDING A DRAINAGE GRID AND ASSOCIATED APPARATUS**
VERFAHREN ZUM SPRITZGIESSEN EINES ABLAUFGITTERS UND ZUGEHÖRIGE VORRICHTUNG
PROCÉDÉ DE MOULAGE PAR INJECTION D'UNE GRILLE D'ÉCOULEMENT ET APPAREIL ASSOCIÉ

(30) Priority: 29.10.2012 IT VR20120212
(43) Date of publication of application: 30.04.2014
(60) Divisional application: 14168519.8
(73) Proprietor: Termoplast S.r.l., 37129 Verona (VR) (IT)
(72) Inventor: Cipriani, Zeno, 37121 Verona (IT)
(74) Representative: Fisauli, Beatrice A. M.

(56) References cited:
- JP-A- H1 181 435
- JP-A- 2005 240 462
- US-B1- 6 443 656

## Description

The present invention refers, in general, to a molding process, and to an apparatus for applying said process. More particularly, the invention refers to an injection molding process which improves the realization of a drainage grid, and to an apparatus for applying said process.

A wide variety of drainage grids are known to cover drainage channels, floor drains, inspection pits or similar hollow spaces that can be incorporated in the soil. Drainage grids of this type can be subjected to various load levels depending on where these grids are inserted.

The EN standards divide manholes and drainage grids in load classes on the base of their load resistance. The load classes are the following: A15, B125, C250, D400, E600, F900.

The classification provides the test load in kN. For instance, the class D400 denotes a product complying with a load test of 400kN. The appropriate class to use for manholes or pits depends on the place of installation, for instance their position inside the roadway.

For instance, the products of load class C250 to which the present invention refers, without this constituting a limitation to the scope of protection of the invention, are generally used for channels open at the top and installed close to the curb side of the sidewalks in an area which, if measured from the edge of the sidewalk, extends from a maximum of 0.5 m on the roadway to a maximum of 0.2 m on the sidewalk.

Said products falling under load class C250 are usually made of metal owing to the load these products must support.

The manufacturers are generally interested in producing drainage grids of the above mentioned type that must be the most stable and durable as possible, at the lowest possible cost.

A partial solution consists in using plastic materials but only for load classes lower than C250 owing to a lower resistance of the plastic material which involves drainage grids having a resistance much lower than that of the metal drainage grids.

As is known, plastic articles can be produced through an injection molding process in which a plastic material, usually a thermoplastic material, is molten and then injected under pressure into a mold formed by two matrices, one matrix being movable to allow the finished piece to be removed.

The prior art contemplates the existence of industrial injection molding processes that take advantage of matrices having such a shape that leads to the development and formation of the product almost entirely in the recesses formed on the movable matrix in order to achieve an easy extraction of the article from the movable matrix.

In the specific sector of the production of drainage grids, made of a plastic material, the drainage grids have a parallelepiped shape, usually having a rectangular section, with a plurality of through holes to mainly allow the passage of fluids through the grid, from the upper face to the lower face. A portion of the lower face comes into contact with the channel that supports the grid.

The known grids, made of a plastic material and showing said constructive structure, do not have a sufficient resistance and therefore, these grids can be used only in pedestrian areas because higher loads would lead to the breakage of the grid itself.

Some known drainage grids have a modified structure that improves the resistance. In particular, grids are known which have a section different from the rectangular section. For instance, the section of these grids has a swelling that develops from the lower face to the outside excluding the portions arranged to come into contact with the channel.

This structure having a lower bulge allows a modest increase in the load which the grid can support and allows the laying of the grid in areas of occasional non longitudinal passage of vehicles, in addition to pedestrian areas.

According to the known art, said grids are made through an injection molding process that utilizes the injection channel formed in the fixed matrix. The bulge in turn is formed in the fixed matrix for convenience of realization of the process and for design habits consolidated.

JP 2005-240462 discloses a base material for a grate and a method for manufacturing said base material. The base material comprises a rod member which has a cross section with a particular shape, such as a "T" shape or a "I" shape or a vertically long rectangle shape.

An aim of the invention is to carry out a drainage grid in a monolithic piece that can be mounted on a channel in the soil and utilized for the drainage of rainwater and waste so as to overcome the above-mentioned problems and others.

Another aim of the invention is to carry out a drainage grid in a plastic material and falling at least under the load class C250, normally reached by metallic grids, through its particular conformation and structure.

Another aim is to carry out an apparatus for the realization of a drainage grid improving its construction and resistance.

Another aim is to carry out an injection molding process that is simple and repeatable and, at the same time, allows to obtain a finished product having a resistant construction.

Said aims and others are achieved according to the invention through an apparatus for the injection molding of drainage grids having an arc-shaped cross-section at a face. The apparatus comprises a fixed matrix and a movable matrix. One or more cavities are formed between the fixed matrix and the movable matrix, said one or more cavities being adapted to receive a predetermined quantity of molten material.

The apparatus is characterized by the fact that the imprint of the one or more cavities is obtained almost entirely in the movable matrix while a predetermined quantity of molten material is contained, almost entirely, in cavities obtained in the fixed matrix, a sprue being obtained in the fixed matrix.

Through this construction, the apparatus allows to carry out outflow grids having ribs with a section shaped like an inverted T, which does not occur in the apparatuses of the prior art.

Advantageously, the fixed matrix may comprise a plurality of fixed male elements shaped like a truncated pyramid, the direction of reduction of their section being opposite to the direction of injection of the molten material in the sprue.

In this way, when the apparatus is opened, the outflow grid may be extracted and removed from the fixed matrix on remaining attached to the movable matrix. The height of the fixed male elements allows to obtain, almost completely, the cavity volume contained in the fixed matrix.

More advantageously, the movable matrix may comprise a plurality of buttons which protrude from the movable matrix for a height which is much lower than the height with which the fixed male elements protrude from the fixed matrix.

The presence of buttons, obtained in the movable matrix allows to keep the outflow grid attached to the movable matrix after the solidification and allows, furthermore, to position the cavity portion that will contain the greatest section of the ribs in the movable matrix.

In addition, each end portion of the fixed male elements may be shaped so as to rest on the corresponding end surface of the related button so as to prevent the passage of plastic material between said portion and said surface when the apparatus is closed.

In this way, it is possible to obtain a better realization of the outflow grid ribs with a section shaped like an inverted T because most of the length of the section shaped like an inverted T, which has a reduced thickness, is carried out between the fixed male elements while the last portion of the section shaped like an inverted T, which has a greater thickness, is carried out between the buttons.

Advantageously, a first contact surface of the fixed matrix may be so shaped to abut with a second contact surface of the movable matrix. The portion of movable matrix forming the cavity receiving the outflow grid may be completely recessed in relation to the second contact surface and one or more portions of fixed matrix forming the cavity receiving the outflow grid may protrude from the first contact surface.

In this way, it is possible to obtain a better removal of the outflow grid from the fixed matrix when it is removed from the movable matrix.

Besides, the aims are achieved according to the invention by an injection molding process to mold drainage grids having an arc-shaped cross-section at a face.

The process is characterized by comprising the following phases:
- putting in contact a movable matrix with a fixed matrix, both being shaped so as to define one or more cavities; said one or more cavities being partially obtained in the movable matrix and partially obtained in
- the fixed matrix, the imprint of the at least one cavity is obtained in the movable matrix (54) almost entirely;
- injecting molten plastic material into the one or more cavities by means of a sprue, said sprue (60) being obtained in said fixed matrix (52);
- waiting for the solidification of the plastic material in the one or more cavities on obtaining a drainage grid for each of the one or more cavities;
- removing the movable matrix from the fixed matrix, the fixed matrix being extracted from the drainage grid, the drainage grid remaining attached to the movable matrix;
- extracting the drainage grid from the movable matrix by means of one or more extractors which are included in the movable matrix and go out on pushing the drainage grid.

Further features and details of the invention will be better understood from the following specification which is supplied as a non-limiting example as well as from the accompanying drawing, wherein:
Fig. 1 is an axonometric top view of a first embodiment of the drainage grid obtained according to the invention;
Fig. 2 is a bottom view of the drainage grid in Fig. 1;
Fig. 3 is a plan top view of the drainage grid in Fig. 1;
Fig. 4 is a longitudinal side view of the drainage grid in Fig. 1:
Fig. 5 is a side view of the drainage grid in Fig. 1;
Fig. 6 is a side view in longitudinal section of the drainage grid according to section BB in Fig. 3;
Fig. 7 Is a view in cross-section of the drainage grid according to section AA in Fig. 3;
Fig. 8 is a section view of a detail indicated by circle C in Fig. 6;
Fig. 9 is a section view of a detail indicated by circle D in Fig. 7;
Fig. 10 is an axonometric view of the drainage grid;
Fig. 11 is a view of a detail indicated by circle E in Fig. 10;
Fig. 12 is a front view of an apparatus for the realization of a drainage grid according to the invention;
Fig. 13 is a top view in longitudinal section of the apparatus according to section BB in Fig. 12;
Fig. 14 is a side view in cross-section of the apparatus according to section AA in Fig. 12;
Figures 15 to 18 are axonometric views representing the phases of an injection molding process to mold an outflow grid according to the invention;
Fig. 19 is a front view of the apparatus according to the invention;
Fig. 20 is a side view in section of the apparatus according to section CC in Fig. 20;
Fig. 21 is an axonometric view in section of the apparatus according to section CC in Fig. 20;
Fig. 22 is a view in section of a detail indicated by circle D in Fig. 21;
Fig. 23 is an axonometric view of an element of the apparatus, carried out according to the invention;
Fig. 24 is a view of a detail indicated by circle E in Fig. 23;
Fig. 25 is an axonometric view of a further element of the apparatus, carried out according to the invention;
Fig. 26 is a view of a detail indicated by circle F in Fig. 25.

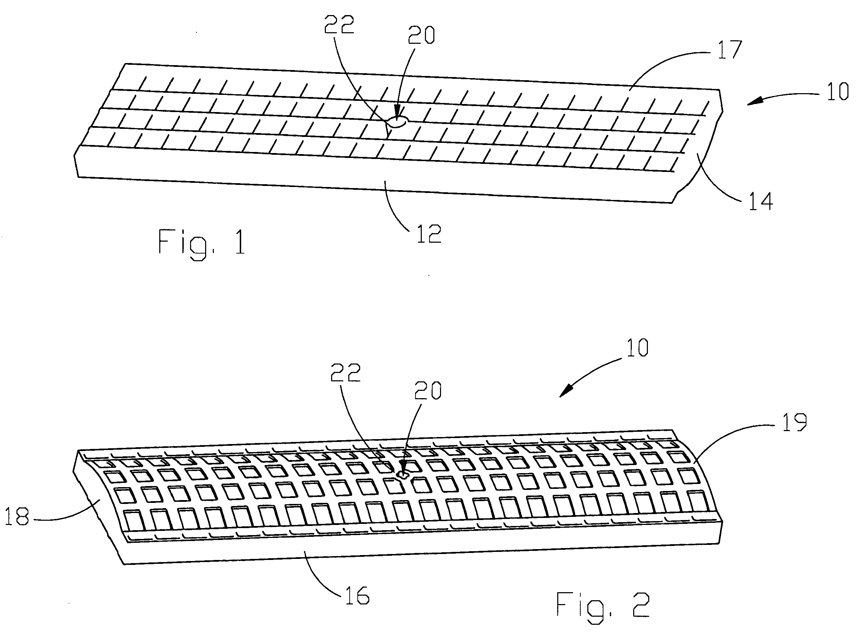

With reference to the accompanying figures, in particular Figure 1, number 10 denotes a drainage grid which is shaped like a rectangular element having four sides 12, 14, 16, 18, an upper face 17 and a lower face 19.

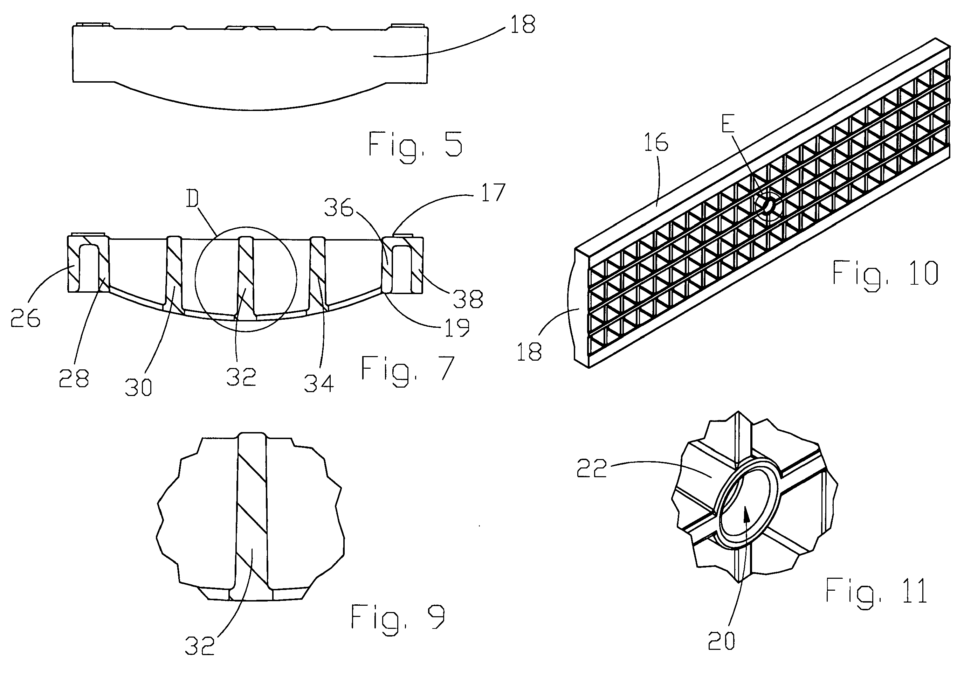

As visible in Figures 5 and 7, the drainage grid has an arc-shaped structure at the lower face 19, with ribs showing a T-shape. The T-ribs improve the resistance of the drainage grid obtained according to the invention in comparison with the drainage grids of the prior art showing ribs of rectangular section.

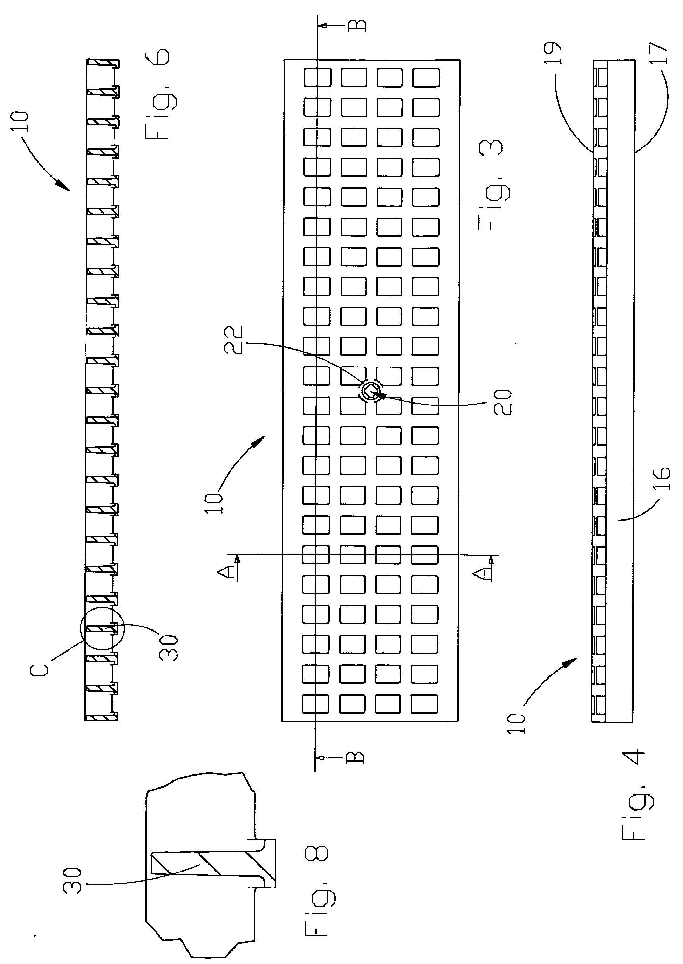

In particular, the drainage grid 10 has a particular base structure consisting of ribs shaped like an inverted T. More precisely, the base structure consists of twenty-three longitudinal ribs 30, as visible in Figure 6 and seven transverse ribs 26, 28, 30, 32, 34, 36, 38, as visible in Figure 7.

The two left transverse ribs 26, 28 are connected to each other at their base so as to form an element shaped like an inverted U. Symmetrically, the two right transverse ribs 36, 38 are connected to each other at their base so as to form another element shaped like an inverted U.

As visible in Figures 1, 2, 3, 10 and 11, the drainage grid 10 comprises a cylindrical body 22 in the middle of the rectangular element. A cavity 20 is formed in said cylindrical body 22.

The drainage grid 10 is made of plastic, preferably polyamide.

The so-described particular structure allows to concentrate the material of which the drainage grid 10 is made in its middle points such as the cylindrical body 22, represented in detail in Figure 11, in which the bending moment reaches its maximum peak during the application of a load.

The load acts on the drainage grid 10 proportionally to the distance from the edge of the channel or drain on which the drainage grid 10 rests once it has been put on. Thus, the maximum effort takes place, for that reason, along the longitudinal axis passing through the centre of the cavity 20, the cavity 20 being used, for instance, for the fixing of the drainage grid 10.

The butterfly diagram of the bending moment has its peak in the lowest point of the section in which the T-ribs improve the resistance of the section. The resulting effect is a considerable increase in tensile strength.

One of the main advantages is that, if the same class of resistance to load and the same kind of material are utilized, a much lighter drainage grid is obtained in comparison with the known grids on the market.

Although a specific embodiment of the invention has been represented and described in detail to explain the application of the principles of the invention, it is to be intended that, of course, the invention may be implemented in manifold variants, without departing from said principles, such as an inverted T-shape.

The known apparatuses and processes do not allow to carry out a drainage grid 10, as previously described, with the longitudinal and transverse ribs with inverted T shape according to the invention or with ribs having a greater section in the lower part of the drainage grid in question and corresponding to the most distant point to the point of application of the load, said area being subjected to a higher tensile stress.

An injection molding process for drainage grids is described below. This process allows to obtain a greater section in the points where the stress load is higher, namely in the lower part of the grid.

Also the apparatus for carrying out the drainage grid 10 according to the invention is described below with particular reference to the particular construction of the apparatus allowing to overcome the problems of the prior art.

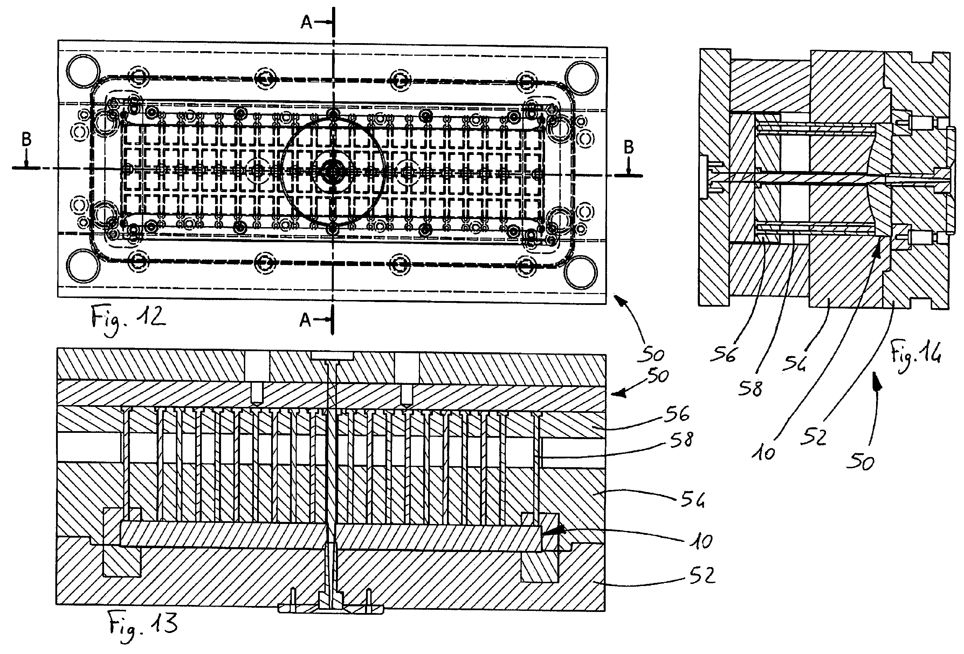

As visible in Figure 12 and subsequent figures, an apparatus 50 comprises a fixed matrix 52 and a movable matrix 54.

The movable matrix 54 comprises also an extraction table 56 to which more extractors 58 are connected, of which only one is represented in each figure. A cavity is formed between the fixed matrix 52 and the movable matrix 54 and receives the molten plastic material. When the molten plastic material solidifies, this material forms an outflow grid 10, as previously described.

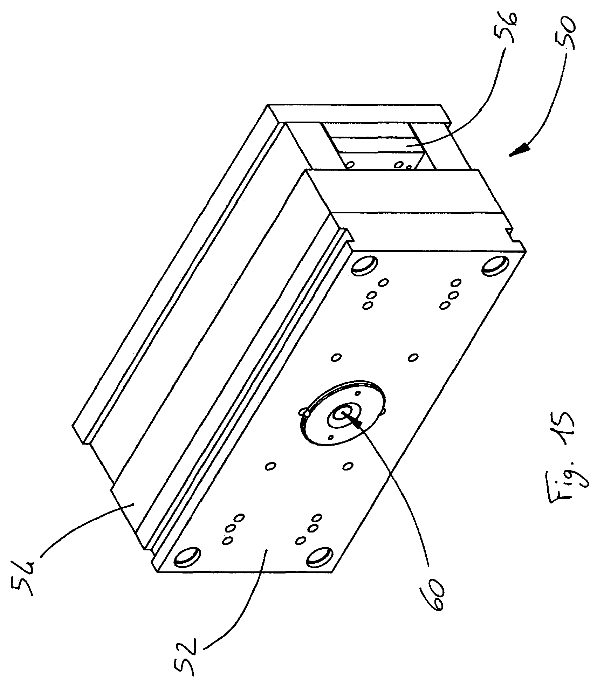

As represented in Figure 15, a sprue 60 is formed in the fixed matrix 52 and the molten plastic material is injected through said sprue in the cavity 20 of the outflow grid 10.

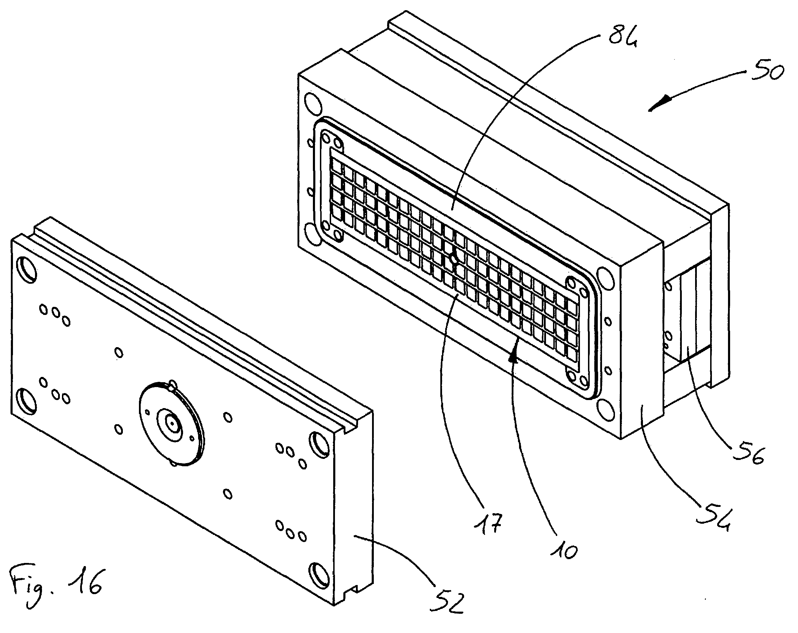

As from Figure 16, after the injection of plastic material through the sprue 60 and after the solidification of the plastic material, the apparatus 50 is opened so that the upper face 17 of the outflow grid 10 is exposed to the outside.

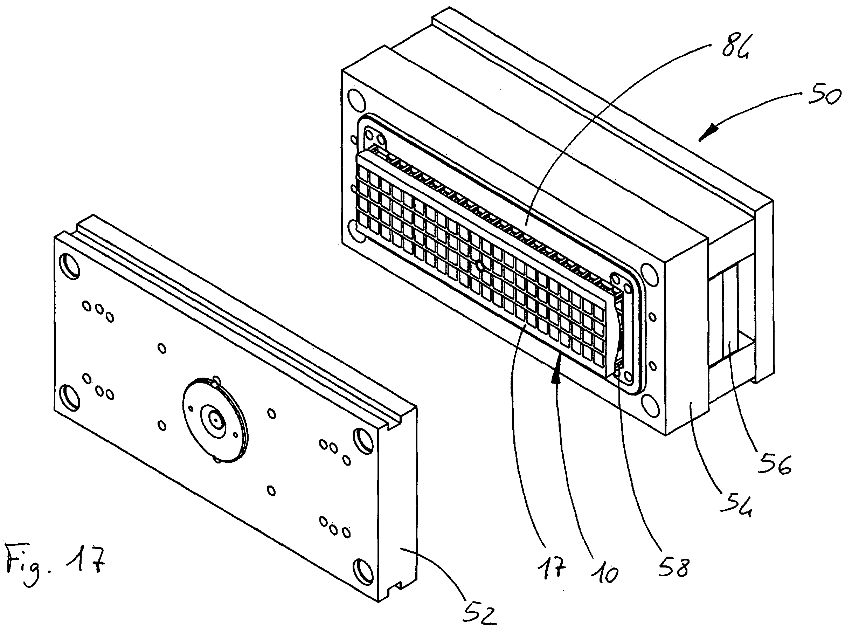

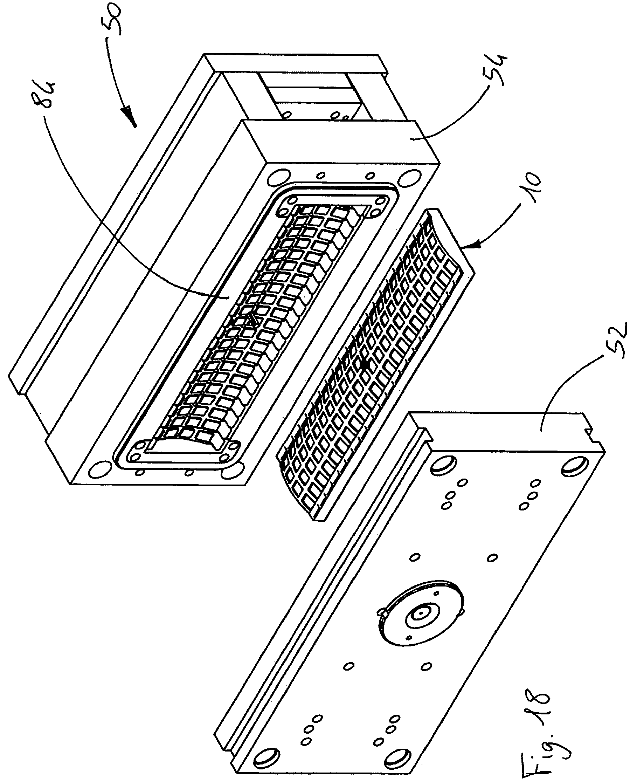

In the following phase, visible in Figure 17, the extraction table 56 advances on pushing the plurality of extractors 58 against the outflow grid 10. The thrust of the plurality of extractors 58 allows the outflow grid 10 to go out of the movable matrix 54 up to be free, as visible in Figure 18.

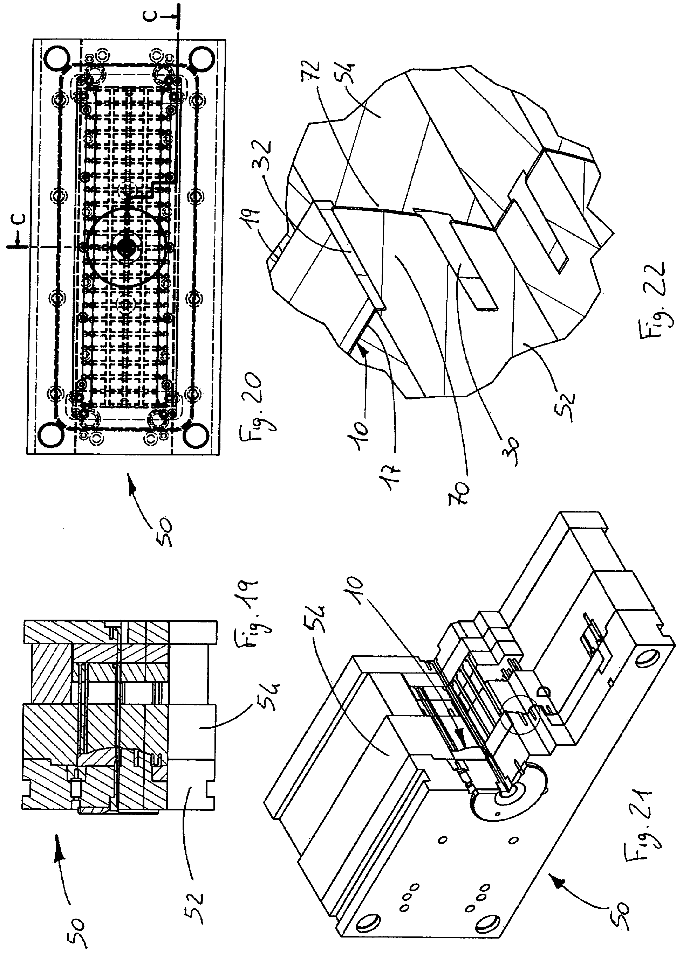

From Figures 19 to 22 it appears clearly the particular shape of the fixed matrix 52 and movable matrix 54 allowing to obtain a structure having a section shaped like an inverted T. In particular in Figure 22 it is possible to clearly see the section of the transverse ribs 30 and 32 whose section reduces on approaching the upper face 17.

Indeed, the section of the transverse ribs increases on approaching the lower face 19 up to reach the maximum section near the lower face 19, in the most remote points to the fixed matrix 52, contained in its cavity.

Thus, the particular shape of the matrices allows to obtain the particular section shaped like an inverted T and facilitates the opening of the apparatus 50 at the same time.

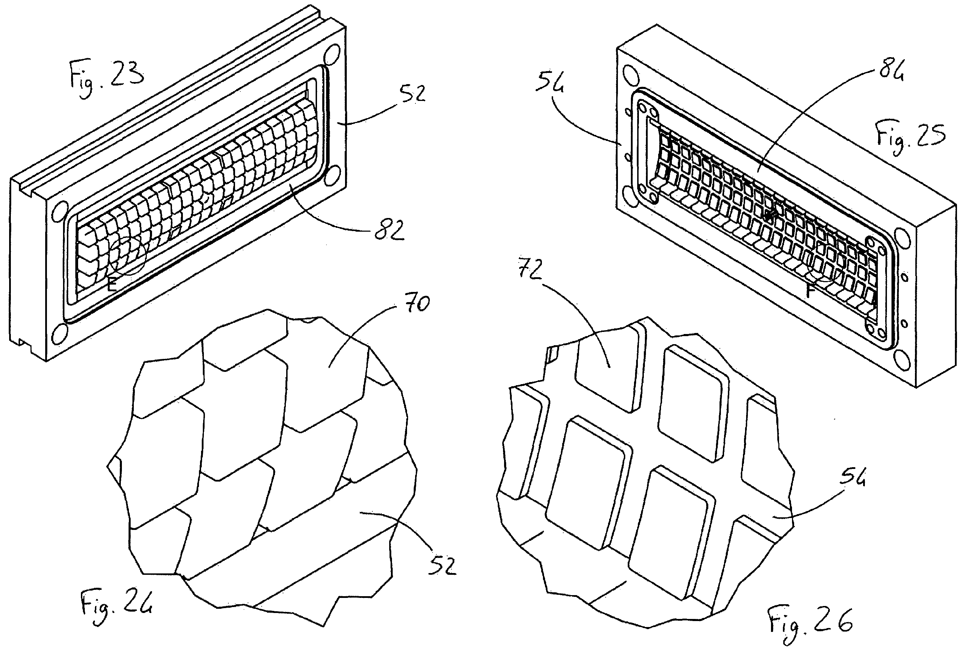

The particular construction of the matrices is visible also in Figures 23 to 26 from which it appears clearly the shape of the profile of the fixed matrix 52 and movable matrix 54 allowing to obtain an outflow grid 10 obtained according to the invention.

In the detail of Figure 24, a plurality of fixed male elements 70 are visible, of which only one is indicated in the figure. The fixed male elements 70 are shaped substantially like a truncated pyramid and are obtained in the fixed matrix 52.

In the detail of Figure 26, a plurality of buttons 72 are visible, of which only one is indicated in the figure. The buttons 72 have a substantially rectangular shape and protrude from the movable matrix 54 with a height which is much lower than the height with which the fixed male elements 70 protrude from the fixed matrix 52.

Each end surface of the fixed male elements 70 is shaped to rest on the corresponding end surface of the relative button 72 in order to prevent the passage of plastic material between the two surfaces when the apparatus 50 is closed, as visible in Figure 15.

The height of the plurality of buttons 72 allows to hold the outflow grid 10 on the movable matrix 54 when the plastic material is solidified and the apparatus 50 is opened.

Besides, as visible in Figure 22, the buttons 72 are shaped in such a way as to allow the formation of the maximum section of the transverse ribs 30 and 32.

As it appears from Figure 23 and 25, a first contact surface 82 of the fixed matrix 52 abuts with a second contact surface 84 of the movable matrix 54. The cavity defined between the fixed matrix 52 and the movable matrix 54 is obtained almost entirely in the fixed matrix 52 while the imprint is obtained almost entirely in the movable matrix 54.

In other words, the portion of movable matrix 54 forming the cavity containing the outflow grid 10 is completely recessed in respect to the second contact surface 84 while a portion of fixed matrix 52 forming the cavity containing the outflow grid 10, namely the fixed male elements 70, protrudes from the first contact surface 82.

In this way, when the apparatus is opened by removing the movable matrix 54 from the fixed matrix 52, the outflow grid 10 is extracted from the fixed matrix 52. In this way, the outflow grid 10 remains substantially contained in the movable matrix 54, as visible in Figure 16.

Unlike the apparatuses known, the so-described construction of the apparatus 50 allows to obtain an outflow grid 10 obtained according to the invention. The invention has been described according to an embodiment in which the article, namely an outflow grid, is produced by utilizing the injection molding of a plastic material.

It is to be intended that the scope of protection of the invention includes also those processes and apparatuses which, according to the invention, refer to the injection molding of outflow grids having dimensions, materials and other processing parameters varying according to the wished product, for instance apparatuses having multiple cavities for carrying out more than one outflow grid at the same time.

## Claims

1. Apparatus (50) for the injection molding of drainage grids (10) having an arc-shaped cross-section at a face (19), said apparatus (50) comprising a fixed matrix (52) and a movable matrix (54), at least one cavity being formed between said fixed matrix (52) and said movable matrix (54), said at least one cavity being adapted to receive a predetermined quantity of molten material,
**characterized in that**
the imprint of the at least one cavity is obtained in the movable matrix (54) almost entirely,
the predetermined quantity of molten material is contained, almost entirely, in cavities obtained in the fixed matrix (52),
a sprue (60) being obtained in said fixed matrix (52).

2. Apparatus (50) according to the preceding claim, wherein the fixed matrix (52) comprises a plurality of fixed male elements (70) shaped like a truncated pyramid, the direction of reduction of their section being opposite to the direction of injection of the molten material in the sprue (60).

3. Apparatus (50) according to the preceding claim, wherein the movable matrix (54) comprises a plurality of buttons (72) which protrude from the movable matrix (54) for a length which is much lower than the length with which the fixed male elements (70) protrude from the fixed matrix (52).

4. Apparatus (50) according to the preceding claim, wherein each end portion of the fixed male elements (70) is shaped so as to rest on the corresponding end surface of the related button (72) so as to prevent the passage of plastic material between said portion and said surface when the apparatus (50) is closed.

5. Apparatus (50) according to one of the preceding claims, wherein a first contact surface (82) of the fixed matrix (52) is so shaped to abut with a second contact surface (84) of the movable matrix (54), the portion of movable matrix (54) forming the cavity receiving the drainage grid (10) being completely recessed in relation to the second contact surface (84) and at least a portion of fixed matrix (52) forming the cavity receiving the drainage grid(10) protrudes from the first contact surface (82).

6. injection molding process to mold drainage grids (10) having an arc-shaped cross-section at a face (19), comprising the following phases:
- putting in contact a movable matrix (54) with a fixed matrix (52), both being shaped so as to define at least one cavity, said at least one cavity being partially obtained in the movable matrix (54) and partially obtained in the fixed matrix (52), the imprint of the at least one cavity being obtained in the movable matrix (54) almost entirely;
- injecting molten plastic material into the at least one cavity by means of a sprue (60), said sprue (60) being obtained in said fixed matrix (52);
- waiting for the solidification of the plastic material in the at least one cavity on obtaining a drainage grid (10) for each at least one cavity;
- removing the movable matrix (54) from the fixed matrix (52), the fixed matrix (52) being extracted from the drainage grid (10), the drainage grid (10) remaining attached to the movable matrix (54);
- extracting the drainage grid (10) from the movable matrix (54) by means of at least an extractor (58) which is included in the movable matrix (54) and goes out on pushing the drainage grid (10).

## Patentansprüche

1. Vorrichtung (50) für den Spritzguss von Entwässerungsgittern (10), die einen bogenförmigen Querschnitt auf einer Seite (19) aufweisen, besagte Vorrichtung (50) beinhaltet eine feste Matrix (52) und eine bewegliche Matrix (54), wobei mindestens ein Hohlraum zwischen besagter fester Matrix (52) und besagter beweglicher Matrix (54) gebildet wird, wobei besagter mindestens ein Hohlraum geeignet ist, eine vorbestimmte Menge Schmelzgut aufzunehmen,
**dadurch gekennzeichnet, dass**
der Abdruck des mindestens einen Hohlraums fast vollständig in der beweglichen Matrix (54) erhalten wird,
die vorbestimmte Menge Schmelzgut fast vollständig in Hohlräumen enthalten ist, die in der festen Matrix (52) gewonnen werden,
in besagter festen Matrix (52) ein Gusskanal (60) gewonnen wird.

2. Vorrichtung (50) nach dem vorhergehenden Anspruch, wobei die feste Matrix (52) eine Vielzahl von festen vorspringenden Elementen (70) beinhaltet, die die Form einer abgestumpften Pyramide aufweisen, wobei die Richtung der Abnahme ihres Querschnitts gegenüber der Einspritzrichtung des Schmelzguts im Gusskanal (60) liegt.

3. Vorrichtung (50) nach dem vorhergehenden Anspruch, wobei die bewegliche Matrix (54) eine Vielzahl von Knöpfen (72) enthält, die aus der beweglichen Matrix (54) um eine wesentlich geringere Länge herausragen, als die Länge, um die die festen vorspringenden Elemente (70) aus der festen Matrix (52) herausragen.

4. Vorrichtung (50) nach dem vorhergehenden Anspruch, wobei jeder Endabschnitt der festen vorspringenden Elemente (70) derart geformt ist, dass es auf der entsprechenden Endoberfläche des entsprechenden Knopfes (72) liegt, um so den Durchgang von Kunststoffmaterial zwischen besagtem Abschnitt und besagter Oberfläche zu verhindern, wenn die Vorrichtung (50) verschlossen ist.

5. Vorrichtung (50) nach einem der vorhergehenden Ansprüche, wobei eine erste Kontaktfläche (82) der festen Matrix (52) so geformt ist, dass sie auf einer zweiten Kontaktfläche (84) der beweglichen Matrix (54) aufliegt, wobei der Teil der beweglichen Matrix (54), der den Hohlraum bildet, der das Entwässerungsgitter (10) empfängt, gegenüber der zweiten Kontaktfläche (84) vollständig zurückgesetzt ist und mindestens ein Teil der festen Matrix (52), der den Hohlraum bildet, der das Entwässerungsgitter (10) empfängt, aus der ersten Kontaktfläche (82) herausragt.

6. Spritzgussverfahren zum Formen von Entwässerungsgittern (10), die einen bogenförmigen Querschnitt auf einer Seite (19) aufweisen, beinhaltend die folgenden Phasen:
- In-Kontakt-Bringen einer beweglichen Matrix (54) mit einer festen Matrix (52), beide derart geformt, dass sie mindestens einen Hohlraum bestimmen, wobei besagter mindestens ein Hohlraum teilweise in der beweglichen Matrix (54) und teilweise in der festen Matrix (52) erhalten wird, wobei der Abdruck des mindestens einen Hohlraums fast vollständig in der beweglichen Matrix (54) erhalten wird;
- Einspritzen geschmolzenen Kunststoffmaterials in den mindestens einen Hohlraum mittels eines Gusskanals (60), wobei besagter Gusskanal (60) in besagter fester Matrix (52) gewonnen wird;
- Warten auf die Erstarrung des Kunststoffmaterials in dem mindestens einen Hohlraum zur Gewinnung eines Entwässerungsgitters (10) für jeden mindestens einen Hohlraum;
- Lösen der beweglichen Matrix (54) von der festen Matrix (52), wobei die feste Matrix (52) aus dem Entwässerungsgitter (10) gezogen wird, während das Entwässerungsgitter (10) an der beweglichen Matrix (54) hängen bleibt;
- Auszug des Entwässerungsgitters (10) aus der beweglichen Matrix (54) mithilfe mindestens eines Auswerfers (58), der in der beweglichen Matrix (54) enthalten ist und beim Drücken des Entwässerungsgitters (10) herauskommt.

## Revendications

1. Appareil (50) pour le moulage par injection de grilles de drainage (10) ayant une section transversale en forme d'arc à une face (19), ledit appareil (50) comprenant une matrice fixe (52) et une matrice mobile (54), dont au moins une cavité est formée entre ladite matrice fixe (52) et ladite matrice mobile (54), au moins une cavité étant adaptée pour recevoir une quantité prédéterminée de matière en fusion,
**caractérisé en ce que**
l'empreinte d'au moins une cavité est obtenue dans la matrice mobile (54) presque entièrement,
la quantité prédéterminée de matière fondue est contenue presque entièrement dans les cavités obtenues dans la matrice fixe (52),
un canal de coulée (60) étant obtenu dans ladite matrice fixe (52).

2. Appareil (50) selon la revendication précédente, dans lequel la matrice fixe (52) comprend une pluralité d'éléments mâles fixes (70) en forme de pyramide tronquée, la direction de réduction de leur section étant opposée à la direction d'injection du matériau liquide dans le canal de coulée (60).

3. Appareil (50) selon la revendication précédente, dans lequel la matrice mobile (54) comprend une pluralité de boutons (72) qui font saillie à partir de la matrice mobile (54) sur une longueur qui est nettement inférieure à la longueur avec laquelle les éléments mâles fixés (70) font saillie à partir de la matrice fixe (52).

4. Appareil (50) selon la revendication précédente, dans lequel chaque partie d'extrémité des éléments mâles fixes (70) est conformée de manière à reposer sur la surface d'extrémité correspondante de la commande (72) de manière à empêcher le passage de la matière plastique entre ladite partie et ladite surface lorsque l'appareil (50) est fermé.

5. Appareil (50) selon l'une des revendications précédentes, dans lequel une première surface de contact (82) de la matrice fixe (52) est conformée de manière à venir en butée avec une seconde surface de contact (84) de la matrice mobile (54), la partie de la matrice mobile (54) formant la cavité de réception de la grille de drainage (10) étant entièrement en retrait par rapport à la deuxième surface de contact (84) et au moins une partie de matrice fixe (52) formant la cavité de réception de la grille de drainage (10) fait saillie à partir de la première surface de contact (82).

6. Procédé de moulage par injection de grilles de drainage de moule (10) ayant une section transversale en forme d'arc à une face (19), comprenant les phases suivantes :
- la mise en contact d'une matrice mobile (54) avec une matrice fixe (52), les deux étant conformés de manière à définir au moins une cavité, au moins une des cavités étant partiellement obtenue dans la matrice mobile (54) et partiellement obtenue dans la matrice fixe (52), l'empreinte d'au moins une cavité étant obtenue dans la matrice mobile (54) presque entièrement ;
- injecter une matière plastique fondue dans au moins une cavité au moyen d'un canal de coulée (60), ledit canal de coulée (60) étant obtenu dans ladite matrice fixe (52) ;
- attendre la solidification de la matière plastique dans au moins une cavité sur l'obtention d'une grille de drainage (10) pour au moins une cavité ;
- retirer la matrice mobile (54) à partir de la matrice fixe (52), la matrice fixe (52) étant extraite de la grille d'écoulement (10), la grille de drainage (10) restant fixée à la matrice mobile (54) ;
- extraire la grille de drainage (10) à partir de la matrice mobile (54) au moyen d'au moins un extracteur (58) qui est inclus dans la matrice mobile (54) et sort en poussant la grille de drainage (10).
